# EUROPEAN PATENT APPLICATION

(11) **EP 1 942 436 A1**
(43) Date of publication of application: **09.07.2008**
(21) Application number: 06821992.2
(22) Date of filing: 20.10.2006
(51) Int. Cl.: G06F 21/24, G06F 12/00

(54) **DATA FILE RECORDING SYSTEM AND DATA FILE RECORDING METHOD**

(30) Priority: 20.10.2005 JP 2005306180
(71) Applicant: Yamato Ltd., Osaka-shi, Osaka 532-0003 (JP)
(72) Inventor: MATSUDA, Seiji, Osaka-shi, Osaka 532-0003 (JP); FUJIMURA, Ryo, Osaka-shi, Osaka 532-0003 (JP); ISHIKAWA, Naoya, Osaka-shi, Osaka 532-0003 (JP)
(74) Representative: Vossius & Partner
(86) International application number: PCT/JP2006/320931
(87) International publication number: WO 2007/046497

(57) **Abstract**

An object of the invention is to provide a data file recording system and a data file recording method that are easily usable by users including less computer literates, not to mention conversion of a format of a data file to be recorded into an external recording device. A first data file 4 read by a computer C is converted into a second data file in a predetermined data format. A recording mode of an external recording device 2 is switched over to a first recording mode capable of executing a recording process. Upon completion of a process of recording the second data file into the external recording device 2, the recording mode of the external recording device 2 is switched over to a second recording mode incapable of executing the recording process.

## Description

### TECHNICAL FIELD

The present invention relates to a data file recording system comprising an external recording device connected to a computer and a control program for controlling the external recording device, and to a data file recording method, and more particularly to an arrangement for switching over permission/non-permission of data recording into an external recording device by a control program.

### BACKGROUND ART

There have been generally and widely spread external recording devices (removable media) which are detachably connectable to a computer, considering features that the external recording devices are portable with recorded data, and usable by being connected to a computer, as long as the computer has a driver (reading device) compatible with the recording medium, and a port. As examples of the external recording devices, there have been developed media of versatile recording systems including magnetic disks (such as flexible disks and HDDs), magnetic tapes, optical disks, magnetic optical disks, and semiconductor memories.

In recent years, as large-capacity external recording devices have been developed, a large amount of data is recordable into the recording media, and usability of users is enhanced. However, careful handling of the recording media is required, considering likelihood that a large amount of data may be leaked if the recording media recorded with the large amount of data are lost.

There are provided music players, recorders, and like devices, which use a recording medium having a large recording capacity and superior portability such as HDDs and semiconductor memories. These music players are connected to a personal computer for storage of music data or like data through the computer. Also, there are recording media capable of recording music data in a format which cannot be played back by the music players.

In view of the above, in order to prevent data leakage to a third party in case of losing a recording medium recorded with data or in a like condition, the user encrypts data to be recorded by manipulating an encryption program before recording the data into the recording medium, and then, records the encrypted data into the recording medium. This is effective in preventing information leakage even if the recording medium is lost, because it is impossible to decrypt the encrypted data unless a correct password is entered.

Also, there is proposed an arrangement (e.g. see "patent document 1"). The publication recites that upon detection of an ejection command to an external recording device to which a computer is connected, the computer is operative to encrypt a certain data file stored in the external recording device so that the data file can be encrypted by detaching the external recording device from the computer according to a predetermined detachment procedure.

Further, there is proposed an output control program configured in such a manner that: a program for monitoring data input/output to and from a computer is installed in the computer; and data output permission/non-permission and execution/non-execution of encryption in data output are set in advance individually with respect to output destinations so that the output data is recorded into a recording medium after being encrypted in response to detection of the output data to the recording medium.
Patent document 1: Japanese Unexamined Patent Publication No. 2004-297358

### Disclosure of the Invention

### Problems to be solved by the Invention

In the above arrangement, data is encrypted by manipulation based on the user's discretion when the user intends to encrypt the data before recording the data into the recording medium, and to record the encrypted data into the recording medium. Accordingly, the data may likely to be recorded into the recording medium without encryption if the user's incentive is low. Also, even if the user is encouraged to encrypt the data, it is unknown whether the encryption is securely executed. Thus, there is a demand for decreasing the need of relying on the user's discretion.

In the information processor recited in the patent document 1, a certain data file is encrypted in response to detection of an ejection command. This enables to decrease the need of relying on the user's discretion. If, however, the user intentionally detaches the external recording device (without executing the predetermined detachment procedure), the external recording device is detached from the computer before the data file recorded in the external recording device is encrypted. This may allow the user to carry the external recording device without encrypting the data file. Also, if the computer is suspended before the external recording device is detached (before an ejection command is detected), this may also allow the user to carry the data file without encryption, because the ejection command is not outputted.

Further, in the arrangement that data input/output to and from a computer is monitored, and the output data is encrypted in response to detection of the output data for recording the encrypted data into the recording medium, it is necessary to install a program having a function of constantly monitoring data input/output to and from the computer. Installation and setting of the program are required under an administrative authorization, particularly considering that data output permission/non-permission, an output method, and the like are set. (In other words, the administrative authorization is required, considering likelihood that the computer may not be normally activated if data output permission/non-permission is erroneously set, or a requirement that a monitoring process (monitoring service) should be activated at the time of startup of the computer in order to constantly monitor data input/output.) Installation or setting of the program is not authorized unless the user has an administrative authorization and is well versed in computers or the program. Also, in the case where data is used via a recording medium between individual computers (e.g. an office-use computer and a home-use computer), it is necessary to install the program in the respective computers on which the data is used. This leads to less motivation for use of the program and obstructs execution of the program.

Furthermore, if a music player loaded with an HDD, a semiconductor memory, or a like recording medium accidentally records music data in a format which cannot be played back by the music player, the user may misunderstand that the music player has broken down because the music data cannot be played back despite the storage. Also, there is a case that the recording medium in the music player is capable of storing data other than music data (e.g. document data). Therefore, careful handling is required, considering likelihood that the recorded data may be leaked if the recording medium recorded with the data is lost, as mentioned above.

In view of the above conventional disadvantages, it is an object of the invention to provide a data file recording system and a data file recording method that are easily usable by users including less computer literates, not to mention conversion of a format of a data file to be recorded into an external recording device.

### Means for solving the problems

In order to solve the above disadvantages, a data file recording system according to an aspect of the invention comprises an external recording device detachably connectable to a computer, and a control program for controlling a process of recording a data file into the external recording device. The external recording device includes a data file recording section for recording a data file therein; a data file recording processing means for executing a process of recording the data file into the data file recording section; and a switching controlling means for switching over a recording mode between a first recording mode capable of executing the process of recording the data file into the data file recording section, and a second recording mode incapable of executing the process of recording the data file into the data file recording section to control permission/non-permission of the data file recording process. The control program causes the computer to function as: a data file converting means for converting a first data file read by the computer connected to the external recording device into a second data file in a predetermined data format; a data file transmitting means for transmitting the second data file converted by the data file converting means to the external recording device; and a switching signal transmitting means for transmitting a first switching signal for switching over the recording mode to the first recording mode when the data file transmitting means starts transmitting the second data file, and for transmitting a second switching signal for switching over the recording mode to the second recording mode upon completion of the data transmission by the data file transmitting means, wherein the switching controlling means in the external recording device switches over the recording mode in accordance with the switching signal transmitted from the switching signal transmitting means.

A data file recording method according to another aspect of the invention is adapted for controlling a process of recording a data file into an external recording device detachably connectable to a computer. The external recording device includes: a data file recording section for recording a data file therein; a data file recording processing means for executing a process of recording the data file into the data file recording section; and a switching controlling means for controlling the data file recording processing means to switch over a recording mode thereof between a first recording mode capable of executing the process of recording the data file into the data file recording section, and a second recording mode incapable of executing the process of recording the data file into the data file recording section. The method comprises: a step of converting the data file read by the computer to which the external recording device is detachably connected into a data file in a predetermined file format; a step of transmitting, to the external recording device, a first switching signal for switching over the recording mode of the switching controlling means to the first recording mode; a step of switching over the recording mode to the first recording mode in response to receiving the first switching signal from the computer; a step of transmitting the data file after the file format conversion to the external recording device; a step of recording the data file transmitted from the computer into the data file recording section; a step of transmitting, to the external recording device, a second switching signal for switching over the recording mode of the switching controlling means to the second recording mode upon completion of the transmission of the data file after the file format conversion; and a step of switching over the recording mode to the second recording mode in response to receiving the second switching signal from the computer.

In the above arrangements, after the first data file is converted into the second data file in the predetermined data format by the control program for controlling the recording process, the recording mode is switched over to the first recording mode capable of executing the recording process. This prevents a user from recording the data file into the external recording device without using the control program. Thus, only the data after its data format conversion can be recorded into the external recording device by the control program.

Also, after the recording process of the second data file is completed, the recording mode is switched over to the second recording mode incapable of executing the recording process. Thus, data file recording after completion of the data file recording process by the control program can be prohibited.

Preferably, the data file converting means may encrypt the first data file read by the computer.

Preferably, the external recording device may include a control program recording means for recording the control program, and the computer may be operative to execute the control program recorded in the control program recording means.

Preferably, the external recording device may include an identification data storing means for storing identification data, and the control program may include an identification data comparing means for storing identification data representing the external recording device recorded with the control program, and for comparing the identification data stored in the control program with the identification data stored in the external recording device, and the data file transmitting means may transmit the second data file only when the identification data stored in the control program is coincident with the identification data stored in the external recording device.

Preferably, the control program may include a data file dividing means for dividing the second data file converted by the data file converting means into a number of data file blocks each having a predetermined size, and the switching signal transmitting means may transmit the first switching signal in transmitting the second data file divided by the data file dividing means, and transmit the second switching signal upon completion of the transmission of the second data file divided by the data file dividing means.

Preferably, the data file recording section may include a semiconductor memory.

Preferably, the data file converting means may convert the first data file into the second data file based on either one or both of data contents information and file attribute information of the first data file read by the computer.

Preferably, the control program may include a program retrieval controlling means for retrieving whether a predetermined program is recorded in the computer executing the control program to control data recording and reading to and from the data file recording section based on a retrieval result.

Preferably, the external recording device may include a connection detecting means for detecting whether the external recording device is connected to the computer, and the switching controlling means may control the data file recording processing means to switch over the recording mode to the second recording mode when the connection detecting means detects the connection of the external recording device to the computer.

Further preferably, the external recording device may include a temporary file recording section for recording a temporary data file created in a readout process of the data file recorded in the external recording device, and a temporary file recording controlling means for controlling data writing and reading in and out of the temporary file recording section so that the temporary file recording controlling means records only the temporary data file into the temporary file recording section.

The inventive data file recording system and the inventive data file recording method are configured in such a manner that after the first data file is converted into the second data file in the predetermined data format by the control program for controlling the recording process, the recording mode is switched over to the first recording mode capable of executing the recording process. This prevents the user from recording the data file into the external recording device without using the control program. Thus, only the data file after its data format conversion can be recorded into the external recording device by the control program. Also, after the recording process of the second data file is completed, the recording mode is switched over to the second recording mode incapable of executing the recording process. Thus, data file recording after completion of the data file recording process can be prohibited.

Also, the data file to be recorded into the external recording device is a data file after its data format conversion by the control program. This arrangement prevents data before its data format conversion from being recorded even if the user intentionally detaches the external recording device from the computer, or even if the computer connected to the external recording device is suspended.

Further, the inventive data file recording system and the inventive data file recording method enable to control whether the recording process is executable or not executable by switching over the recording mode of the external recording device detachably connected to the computer, without the need of constantly monitoring data output from the computer main body, or setting data output permission/non-permission or an output method. This allows various users including a user with a user authorization which is not as high as administrative authorization to record only a data file after its data format conversion into the external recording device. Also, there is no need of setting data output permission/non-permission or an output method for individual computer main bodies. This enables users including less computer literates to easily use the external recording device.

Since the first data file read by the computer is encrypted, and merely the encrypted data file is recorded into the external recording device, only the data file after its encryption can be transported without relying on the user's discretion. This prevents data leakage even if the external recording device is lost.

The control program for controlling the recording process of the data file into the external recording device is recorded in the external recording device. This eliminates the need of recording the control program in advance in a computer, and enables to record the data after its data format conversion into the external recording device, as long as the computer can recognize the external recording device.

Comparing the identification data stored in the external recording device with the identification data stored in the control program enables to judge whether the external recording device connected to the computer is the external recording device recorded with the control program. This not only allows for securing control of the external recording device, but also enables to prevent an erroneous operation of a recording device other than the registered external recording device, because a switching signal is not transmitted to the other recording device.

The second data file to be recorded into the external recording device is divided into a certain number of data file blocks each having a predetermined size. The recording mode is switched over to the first recording mode in transmitting the data file blocks to the external recording device, and is switched over to the second recording mode upon completion of transmission of the data file blocks. This enables to record the data while dividing a time capable of executing a continuous recording process. This arrangement prevents a data file which is not controlled by the control program from being recorded in recording a second data file of a large capacity.

Since the data file recording section includes a semiconductor memory, switching over between permission and non-permission of the recording process is enabled by controlling an electrical signal to the semiconductor memory. This enables to execute the recording control into the external recording device with a simplified means, and to miniaturize the external recording device.

Also, since data conversion into the second data file is determined based on the attribute information or the contents information of the first data file, this enables to convert only the data in a specific file format. For instance, data conversion from the first data file into the second data file is determined based on a judgment result as to whether a virus program is contained in the first data file. This enables to prevent the virus program from being recorded into the data file recording section. Further, confidential information leakage can be prevented, or permission/non-permission of data format conversion can be determined by determining execution/non-execution of data conversion depending on the contents of the data.

Since the control program is provided with the program retrieval controlling means, this arrangement enables to set requirements concerning installation/non-installation of a virus check program, installation/non-installation of a specific program such as a file exchange program, updating/non-updating of an OS or an application program including setting/non-setting of automatic updating thereof individually with respect to the retrieved programs; and enables to control data writing and reading to and from the external recording device. This arrangement enables to prevent a virus program from being recorded into the external recording device, or prevent a computer loaded with a virus program from recording the first data file, thereby preventing spread of the virus program or data leakage by way of the virus program.

The external recording device includes the connection detecting means for detecting whether the external recording device is connected to the computer, and the switching controlling means controls the data file recording processing means to switch over the recording mode to the second recording mode when the connection detecting means detects the connection of the external recording device to the computer. This enables to securely prevent data recording into the external recording device whenever the connection of the external recording device to the computer is detected.

### BRIEF DESCRIPTION OF THE DRAWINGS

FIG. 1 is a block diagram showing a data file recording system in executing a recording process.
FIG. 2 is a block diagram showing a configuration that an external recording device has a control program recording means.
FIG. 3 is a block diagram showing a configuration that a computer has the control program recording means.
FIG. 4 is a flowchart showing a process to be executed when a data file is recorded into the external recording device.
FIG. 5 is a sequence diagram showing a process to be executed when a data file is recorded into the external recording device.
FIG. 6 is a diagram showing a screen image when a data file is recorded into the external recording device.
FIG. 7 is a diagram for describing a condition as to whether a recording process into the external recording device is executable/non-executable.
FIG. 8 is a block diagram showing the data file recording system in executing a readout process.
FIG. 9 is a flowchart showing a process to be executed when a data file is read out from the external recording device.
FIG. 10 is a flowchart showing an operation of erasing a data file recorded in the external recording device.

### Brief Description of Numerals

1: data file recording system
2: external recording device
3: control program
4: first data file
5: data file recording section
6: data file recording processing means
7: switching controlling means
8: identification data storing means
9: control program recording means
10: data file converting means
11: data file dividing means
12: data file transmitting means
13 switching signal transmitting means
14: identification data comparing means
16: storage destination designation screen image
17: conventional recordable/unrecordable condition
17a: recording process allowable condition
18: present recordable/unrecordable condition
18a: recording process allowable
18b: recording process unallowable
19: present recordable/unrecordable condition
19a: recording process allowable
19b: recording process unallowable
20: program retrieval controlling means
21: connection detecting means
22: temporary data recording section
23: temporary data recording processing means
C: computer

### BEST MODE FOR CARRYING OUT THE INVENTION

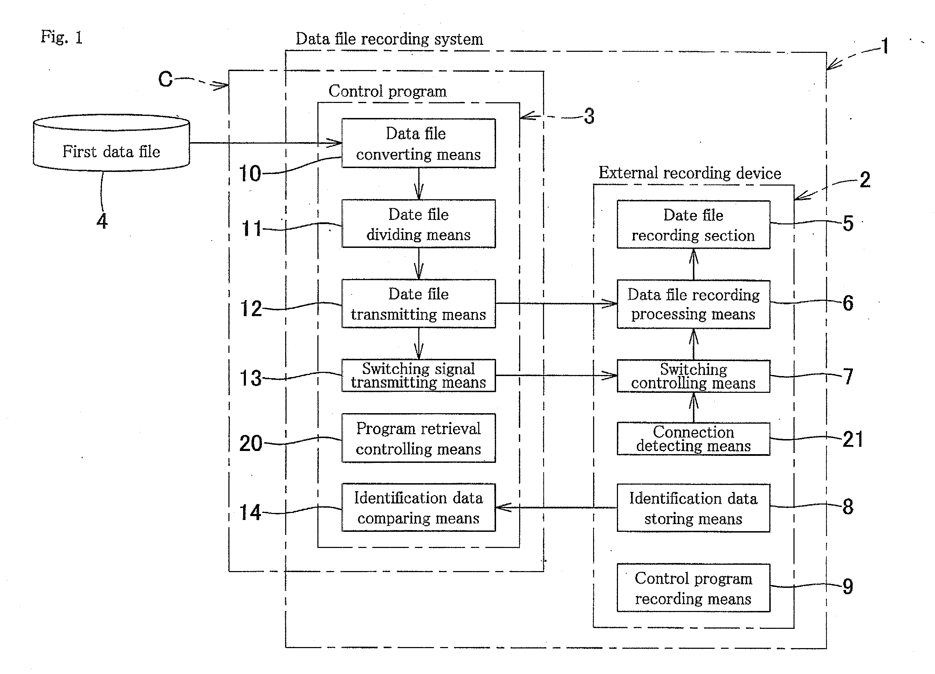

A data file recording system 1 and a data file recording method according to the present invention comprise, as shown in FIGS. 1 through 4, a control program 3 to be executed by a computer C and an external recording device 2, wherein the computer C executing the control program 3 reads out a first data file 4 to record the data file after its data format conversion into the external recording device 2 detachably connected to the computer C.

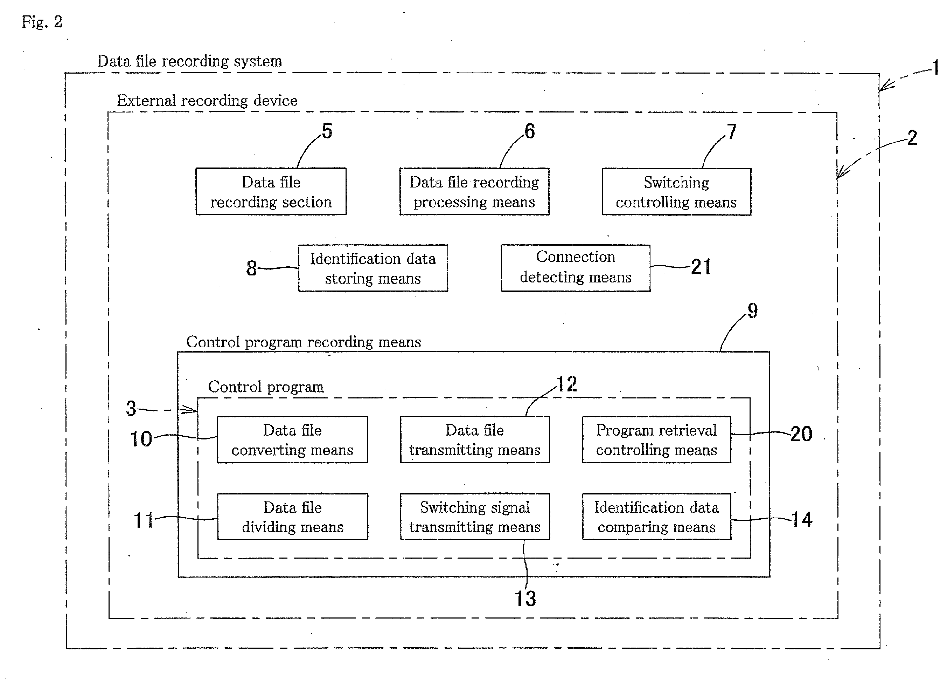

FIG. 2 is a diagram showing an example that the external recording device 2 has a control program recording means 9 recorded with the control program 3. In use of the external recording device 2, as shown in FIG. 1, the computer C reads out the control program 3 recorded in the control program recording means 9 for execution of the control program 3.

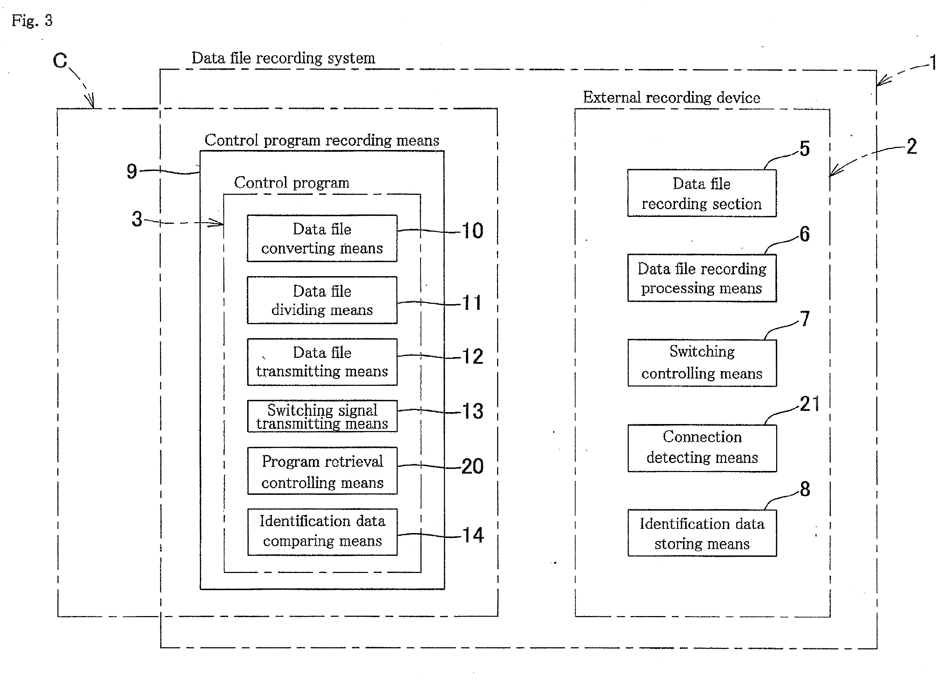

FIG. 3 is a diagram showing an example that the computer C has the control program recording means 9. In use of the external recording device 2 in this arrangement, the computer C executes the control program 3 recorded therein.

The external recording device 2 is at least comprised of a data file recording section 5, a data file recording processing means 6, a switching controlling means 7, an identification data storing means 8, and a connection detecting means 21.

The control program 3 causes the computer C to function at least as a data file converting means 10, a data file dividing means 11, a data file transmitting means 12, a switching signal transmitting means 13, and an identification data comparing means 14.

The control program recording means 9 may be provided in the external recording device 2 as shown in FIG. 2, or may be provided in the computer C as shown in FIG. 3. In the case where the control program recording means 9 is provided in the external recording device 2, even with use of the computer C in which the control program 3 is not recorded, the control program 3 can be read out from the control program recording means 9 for execution of the control program 3. This eliminates the need of recording the control program 3 in the computer C, and data recording, reading, erasing, or a like operation is enabled, with use of the computer C in which the control program 3 is not recorded, by merely carrying the external recording device 2.

The data file converting means 10 is a means for converting the first data file 4 in a certain format into a data file in a predetermined data format. Various data format conversion methods are proposed. For instance, a first data file in a plain text format may be converted into encryption data according to a predetermined encryption scheme; music data in a certain format may be converted into data in another format (e.g. a data file in wav format may be converted into a data file in mp3 format); data in a list format may be converted into data in csv format; or the first data file 4 may be converted into a compression file.

As will be described later, in reading out the encrypted data by the data file converting means 10, the data file converting means 10 also executes decryption. Also, in the case where the data file converting means 10 executes data compression in recording the first data file, the data file converting means 10 executes data decompression in reading out the data file.

Also, the data file converting means 10 may determine conversion/non-conversion of the first data file 4 into a second data file, based on file attribute information or data contents information of the first data file 4. Examples of the file attribute information are data relating to a format of a data file, a file capacity, access right information set in the control program, and a timestamp of a data file. For instance, in the case where merely text data in a plain text format is encrypted, the text data in a plain text format is encrypted by the data file converting means 10, whereas music data is not converted and is not recorded into the data file recording section 5. In the case where the first data file 4 contains a virus program, execution/non-execution of data conversion into the second data file is determined based on a signal from a virus check program installed in the computer C. The virus program to be checked by the virus check program not only includes viruses in a strict sense but also includes malicious programs (malware) such as worm, Trojan horse, and spyware. Alternatively, the data file converting means 10 may retrieve whether specific characters or character strings are included in document data to determine execution/non-execution of data conversion based on a retrieval result.

In this way, determining execution/non-execution of data conversion into the second data file based on the attribute information or the contents information of the first data file 4 enables to convert only data in a specific file format. This also enables to prevent a virus program from being recorded into the data file recording section 5. In addition, data leakage can be prevented by determining execution/non-execution of data conversion depending on the contents of the data.

The data file dividing means 11 is a means for dividing the second data file converted by the data file converting means 10 into a number of data file blocks each having a predetermined size. The data file may be divided so that the data file blocks each has a predetermined size. Alternatively, the user may manipulate the control program to change the size of data file blocks. Further alternatively, the number of data file blocks may be set to a fixed number so that the fixed number of data file blocks are obtained irrespective of the size of the data file before dividing.

As will be described later, in reading out the data file blocks, the data file dividing means 11 binds the data file blocks.

The data file transmitting means 12 is a means for transmitting the data file divided by the data file dividing means 11 to the external recording device. In the case where the second data file is not divided, the second data file converted by the data file converting means 10 is transmitted.

Further, in reading out the data from the external recording device 2, the data file transmitting means 12 transmits the data read out from the external recording device 2.

The switching signal transmitting means 13 is a means for transmitting a first switching signal before the data file transmitting means 12 starts transmitting the data file to the external recording device 2, and for transmitting a second switching signal upon completion of the data file transmission.

The first switching signal is a signal for switching over the recording mode of the external recording device 2 to a first recording mode capable of executing a process of recording a data file. As will be described later, by receiving the first switching signal, a data file recording into the external recording device 2 is enabled. The second switching signal is a signal for switching over the recording mode of the external recording device 2 to a second recording mode incapable of executing the process of recording a data file. As will be described later, by receiving the second switching signal, a data file recording into the external recording device 2 is disabled.

The data file recording section 5 is adapted to record the second data file transmitted from the computer C. The data file recording section 5 may be a recording medium for recording data, using magnetism or light, or may be a recording medium for recording data, using an electric signal, such as a semiconductor memory. If the data file recording section 5 is comprised of a semiconductor memory, permission/non-permission of recording can be easily controlled by controlling (blocking) an electrical signal to be inputted. Thus, the latter arrangement is advantageous in executing the recording control into the external recording device with a simplified means, which enables to miniaturize the external recording device 2.

The data file recording processing means 6 is a means for selectively executing a recording process into the data file recording section 5. When the external recording device 2 is in the first recording mode, upon receiving a data file from the data file transmitting means 12, the data file recording processing means 6 is operative to record the received data file into the data file recording section 5. When the external recording device 2 is in the second recording mode, the data file recording processing means 6 is inoperative to record the data file into the data file recording section 5 even if the data file is transmitted from the computer C.

As will be described later, the data file recording processing means 6 also executes a process of reading out the data file stored in the data file recording section 5.

The switching controlling means 7 is a means for receiving the first switching signal and the second switching signal transmitted from the switching signal transmitting means 13. Upon receiving the first switching signal, the switching controlling means 7 controls the data file recording processing means 6 to switch over the recording mode to the first recording mode. Upon receiving the second switching signal, the switching controlling means 7 controls the data file recording processing means 6 to switch over the recording mode to the second recording mode.

In other words, the external recording device 2 is allowed to record the data file exclusively when the first switching signal is sent from the control program 3, and is not allowed to record the data file when the second switching signal is sent from the control program 3.

The connection detecting means 21 is a means for detecting whether the external recording device 2 is connected to an apparatus such as the computer C. For instance, in use of a recording device connectable to a port of a USB (Universal Serial Bus), in response to detection of the connection of the recording device to the computer, the computer sends or receives a signal to identify the newly connected recording device. The connection detecting means 21 detects the connection by detecting the signal.

When the connection detecting means 21 detects the connection to the computer C, the switching controlling means 7 controls the data file recording processing means 6 to switch over the recording mode to the second recording mode. In this way, in response to detection of the connection to the computer C, the recording mode is securely switched over to the second recording mode. Therefore, even if the external recording device 2 in the first recording mode is intentionally detached from the computer C, upon re-connection of the external recording device 2 to the computer C, the recording mode is securely switched over to the second switching mode, which prevents recording of the first data file 4 without its data format conversion.

The control program recording means 9 is a means for recording the control program 3.

The identification data storing means 8 is a means for storing identification information set in the external recording device 2. Examples of the identification data are serial numbers or PNP device TD. The serial numbers or PNP device ID may be set individually with respect to the external recording devices 2, or may be set individually depending on the kinds of products i.e. the external recording devices 2.

The identification data comparing means 14 in the control program 3 is a means for comparing the identification data representing the external recording device 2 recorded with the control program 3, with identification data representing the external recording device 2, which is recorded in the control program 3, to judge whether the two identification data are coincident with each other.

In use of PNP device ID as the identification data, if the OS (Operating System) of the computer C is Windows^{®}, PNP device ID of the external recording device 2 connected to the computer C can be acquired, even at a lowest possible "User" level as the user access right. This allows for use of the external recording device 2 irrespective of the level of the user access right.

Also, as shown in FIGS. 1 through 3, the control program 3 may be provided with a program retrieval controlling means 20 for retrieving whether a specific program is installed (recorded) in the computer C executing the control program 3 to control data recording and/or reading to and/or from the data file recording section 5 based on a retrieval result.

The program retrieval controlling means 20 retrieves, for instance, installation/non-installation of a virus check program, installation/non-installation of a specific program such as a file exchange program, updating/non-updating of an OS or an application program including setting/non -setting of automatic updating thereof, and installation/non-installation of the control program 3; sets a requirement individually with respect to the retrieved programs; and controls data writing and data reading to and from the external recording device 2.

Specifically, the program retrieval controlling means 20 retrieves whether a virus check program is installed or not; and controls the external recording device 2 so that a data recording process (data writing process) or a data reading process to or from the data file recording section 5 is executed if the virus check program is installed, and controls the external recording device 2 so that a data recording process or a data reading process to or from the data file recording section 5 is not executed if the virus check program is not installed. As an altered arrangement, the program retrieval controlling means 20 may retrieve whether a specific program such as a file exchange program is installed or not, and controls the external recording device 2 so that a data recording process or a data reading process to or from the data file recording section 5 is not executed if the specific program is installed. As a further altered arrangement, the program retrieval controlling means 20 may retrieve whether automatic updating of an OS or a specific application program is executed (automatic updating is set, and confirmation as to whether an updated program is loaded is executed within a predetermined period); and controls the external recording device 2 so that a data reading process from the data file recording section 5 is executed if the automatic updating is set, and the conformation as to whether the updated program is loaded is executed within the predetermined period, and controls the data file recording section 5 so that a data reading process from the data file recording section 5 is not executed if the automatic updating is not set, and the confirmation is not executed within the predetermined period. As a yet further altered arrangement, in the case where the control program 3 recorded in the external recording device 2 is installed in the computer C, the control program 3 installed in the computer C may execute the aforementioned processes.

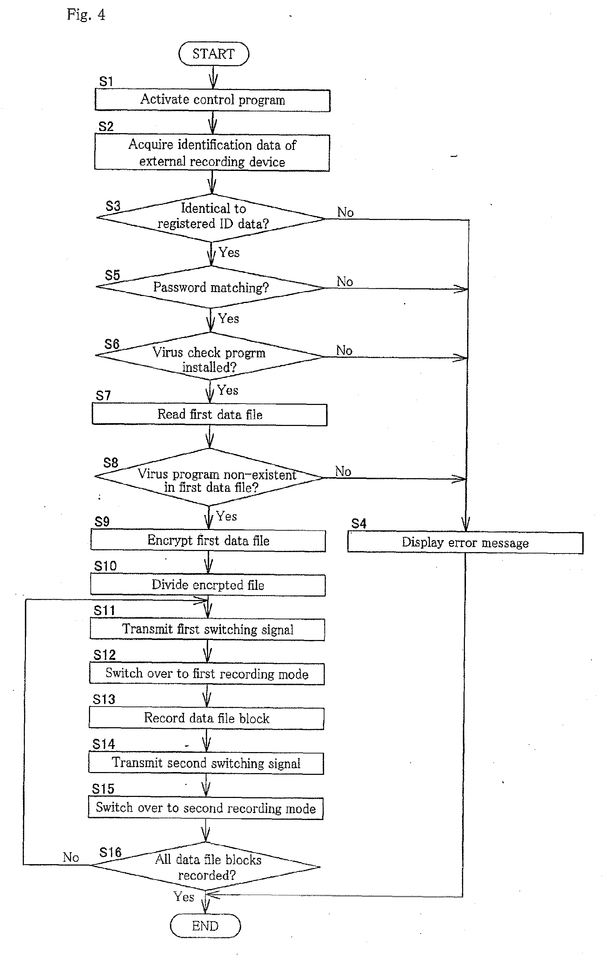

In the following, a flow on a process to be executed in recording the first data file after encryption into the external recording device 2 connected to the computer C is described referring to FIGS. 1 and 4.

First, the external recording device 2 is connected to the computer C. A user manipulates the computer C to activate the control program 3 recorded in the external recording device 2 (Step S1). Alternatively, the control program 3 may be automatically activated upon connection of the external recording device 2 to the computer C, in place of the user's manipulation. Then, the identification data comparing means 14 acquires the identification data stored in the identification data storing means 8 (Step S2), and compares the identification data representing the external recording device 2 with the identification data stored in the control program 3 to judge whether the two identification data are coincident with each other (Step S3). If the two identification data are not coincident with each other, an error message is displayed, and the process of the control program 3 is ended (Step S4). If the two identification data are coincident with each other, the process thereafter is executed because the external recording device 2 connected to the computer C is a registered recording device.

If the external recording device 2 is a registered recording device, a display section of the computer C displays a password entry screen image (not shown) to prompt the user to enter a password. Then, it is judged whether the password entered by the user matches with a password stored in a password storing means (not shown) provided in the external recording device 2. If the judgment result indicates password mismatching, the routine proceeds to Step 4 (S4). If the judgment result indicates password matching, the routine proceeds to Step 6 to execute the process thereafter (Step S5).

Alternatively, biometrics such as fingerprint authentication, vein authentication, voice authentication, iris authentication may be used, in place of the password authentication.

If the judgment result in Step S5 indicates password matching, the program retrieval controlling means 20 checks whether a virus check program is installed in the computer C. If a virus check program is not installed, the routine goes to Step 4 (S4), and if a virus check program is installed, the routine goes to Step 7 (S7).

In Step 6 (S6), a judgment is made as to whether a process thereafter will be continued based on installation/non-installation of the virus check program. Alternatively, a judgment may be made as to whether the process thereafter will be continued based on installation/non-installation of a specific program such as a file exchange program, or updating/non-updating of an OS or an application program including setting/non-setting on updating thereof.

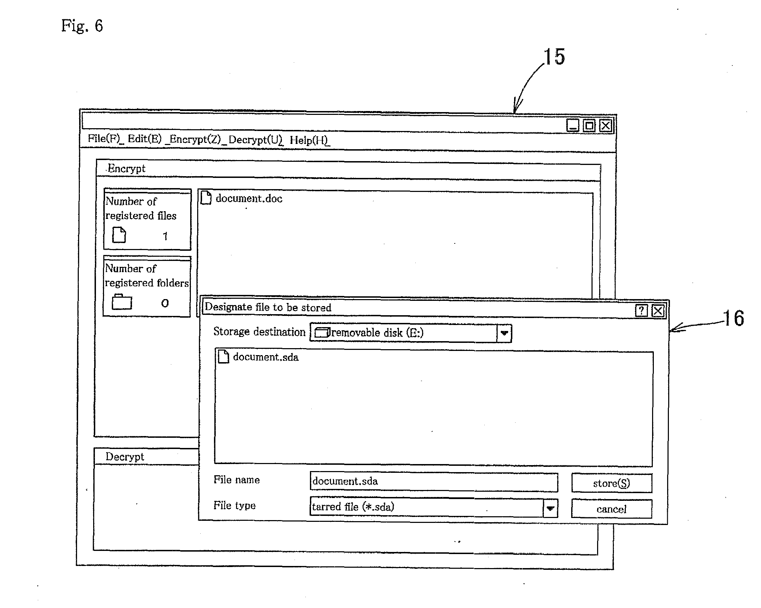

If it is judged that a virus check program is installed in Step 6 (S6), the computer C displays a screen image 15 as shown in FIG. 6 on the display section thereof. Then, the user is allowed to select a data file to be recorded into the external recording device 2, and to select a destination where the selected data file is to be stored by manipulating a storage destination designation screen image 16.

In response to the user's selection of the storage destination of the data file, the computer C reads the first data file 4 before its data format conversion (Step S7). Then, a judgment is made as to whether the read first data file 4 contains a virus program, using the virus check program whose installation has been confirmed in Step 6. If the judgment result indicates that the first data file 4 contains a virus program, the routine proceeds to Step 4 (S4), and if the judgment result indicates that the first data file 4 does not contain a virus program, the routine continues the process thereafter (Step S8).

Then, the data file converting means 10 encrypts the read first data file 4, and creates an encrypted file (second data file) (Step S9). Then, the data file dividing means 11 divides the encrypted file into a certain number of data file blocks each having a predetermined size (Step S10). Upon completion of the dividing of the encrypted file, the switching signal transmitting means 13 transmits the first switching signal to the external recording device 2 (Step S11). Upon receiving the first switching signal, the switching controlling means 7 in the external recording device 2 controls the data file recording processing means 6 to switch over the recording mode to the first recording mode (Step S12). Then, the data file transmitting means 12 transmits one of the data file blocks divided in Step 10 (S10) to the external recording device 2 for recording the data file block into the data file recording section 5 (Step S13). Upon completion of the data file block recording into the data file recording section 5, the switching signal transmitting means 13 transmits the second switching signal (Step S14). Then, the switching controlling means 7 controls the data file recording processing means 6 to switch over the recording mode to the second recording mode (Step S15). Thereafter, it is judged whether all the data file blocks divided in Step 10 (S10) have been recorded in the external recording device 2. If the judgment result indicates that all the data file blocks have not been recorded, the routine proceeds to Step 11 (S11) to record the data file blocks that have not been recorded into the external recording device 2 (Step S16). If, on the other hand, the judgment result indicates that all the data file blocks have been recorded, the routine ends (Step S16).

In this way, the computer C records the first data file 4 into the external recording device 2.

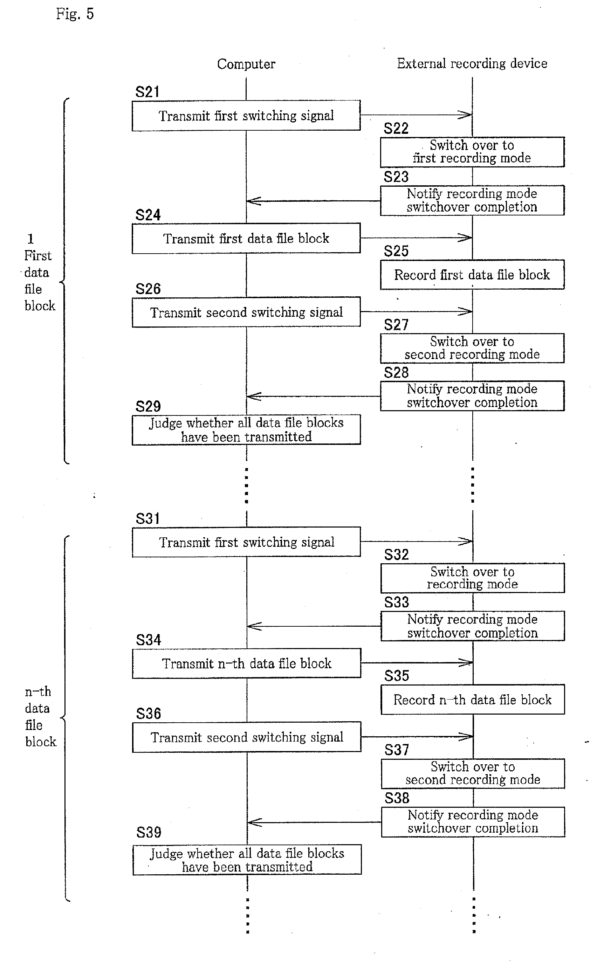

Next, the processes from Step 11 (S11) to Step 16 (S16) in FIG. 4 are described in detail. FIG. 5 is a sequence diagram showing the processes from Step 11 (S11) to Step 16 (S16) in FIG. 4 .

Upon completion of the dividing of the encrypted file, a process of recording the first data file block into the external recording device 2 is executed. Specifically, the computer C transmits the first switching signal to the external recording device 2 (Step S21). Upon receiving the first switching signal, the external recording device 2 switches over the recording mode to the first recording mode capable of executing a recording process into the data file recording section 5 (Step S22). Upon completion of the switchover to the first recording mode, the external recording device 2 transmits a signal notifying recording mode switchover completion to the computer C (Step S23). Upon receiving the recording mode switchover completion notification signal, the computer C transmits the first data file block to the external recording device 2 (Step S24). Then, the external recording device 2 records the transmitted first data file block therein (Step S25). Upon completion of the recording of the first data file block (completion of the transmission of the first data file block), the computer C transmits the second switching signal to the external recording device 2 (Step S26). Upon receiving the second switching signal, the external recording device 2 switches over the recording mode to the second recording mode incapable of executing the recording process into the data file recording section 5 (Step S27). Upon completion of the switchover to the second recording mode, the external recording device 2 transmits a signal notifying recording mode switchover completion to the computer C (Step S28). Then, upon receiving the recording mode switchover completion notification signal, the computer C judges whether all the data file blocks have been transmitted to the external recording device 2 (Step S29).

Step 21 (S21) through Step 29 (S29) describe the process of recording the first data file block. Similarly to the recording process concerning the first data file block, a process of recording the n-th data file block is executed by executing the processes from Step 31 (S31) to Step 39 (S39), and the recording process concerning the n-th data file block is cyclically repeated until recording of all the data file blocks into the data file recording section 5 is completed.

In the aforementioned embodiment, the encrypted file is recorded after dividing the file. Alternatively, the second data file may be integrally transmitted to the external recording device 2, without dividing the data file by the data file dividing means 11. In the altered arrangement, the processes in Step 10 (S10) and Step 16 (S16) in FIG. 4 are not executed.

In the embodiment, the data file converting means 10 encrypts the first data file. Alternatively, the first data file may be converted into data in another format, in place of the encryption.

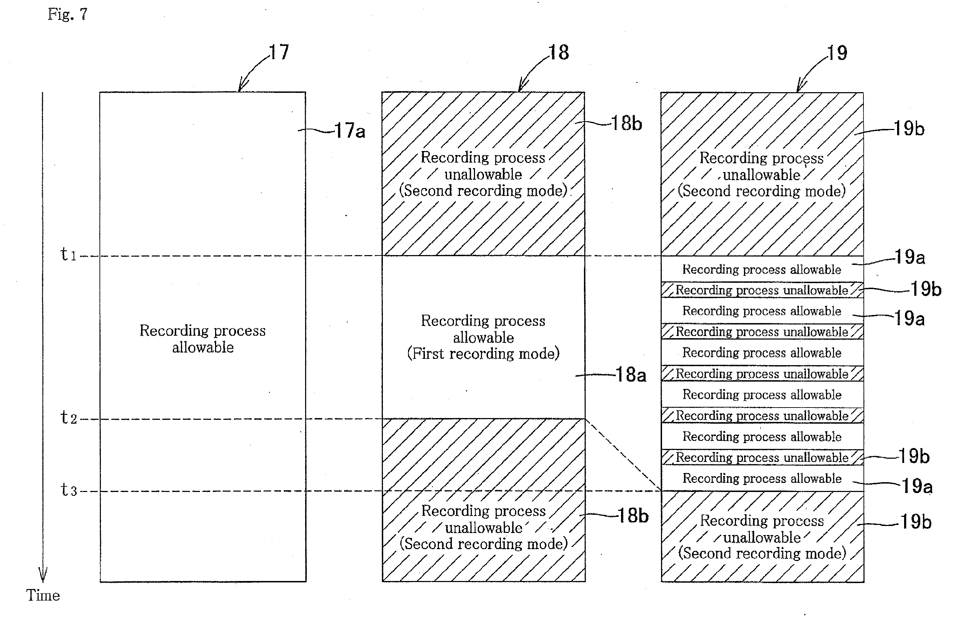

In the following, description is made concerning a condition as to whether data is recordable or unrecordable in the case where the recording mode of the external recording device 2 is switched over in response to receiving the switching signal from the computer C, as is implemented in the foregoing embodiment. The reference numeral 17 in FIG. 7 denotes a condition as to whether data is recordable or unrecordable into a conventional external recording device. The reference numeral 18 in FIG. 7 denotes a condition as to whether data is recordable or unrecordable into the external recording device 2 of the invention in recording the second data file integrally (without dividing). The reference numeral 19 in FIG. 7 denotes a condition as to whether data is recordable or unrecordable into the external recording device 2 of the invention in recording the second data file after dividing.

The recordable/unrecordable condition 17 in the conventional external recording device has a recording process allowable condition 17a where a recording process is allowable throughout all the time zones. In this condition, data is writable all the time zones including a time zone before the point of time t1 when data file recording is started, and a time zone after the point of time t2 when the data file recording is ended. Thus, in the condition 17a, a file designated by the user is always recordable, and an unencrypted data file (without data conversion) is recordable.

On the other hand, the recordable/unrecordable condition 18 in the inventive external recording device 2 has a recording process unallowable condition 18b in a time zone before the point of time t1 when data file recording is started, because the recording mode is set to the second recording mode; a recording process allowable condition 18a in a time zone from the point of time t1 to the point of time t2 while a data file recording process is executed, because the recording mode is set to the first recording mode in this time zone by the control program 3; and a recording process unallowable condition 18b in a time zone after the point of time t2 when the recording process is ended, because the recording mode is set to the second recording mode in this time zone by the control program 3. With this configuration, in recording the data file into the external recording device 2, as shown in FIGS. 1 and 4, the recordable/unrecordable condition 18 is switched over from the recording process unallowable condition 18b to the recording process allowable condition 18a after the data file is converted into the second data file by the control program 3; and then, is switched over from the recording process allowable condition 18a to the recording process unallowable condition 18b upon completion of the second data file recording. This allows for recording only the converted (encrypted) data file, while preventing the non-converted (unencrypted) data file from being recorded. Also, this arrangement prohibits the recorded data from being erased or altered.

If the time zone (t1 to t2) of the recording process allowable condition 18a in the recordable/unrecordable condition 18 in FIG. 7 is considerably large (e.g. 1 minute or more) due to a large size of the second data file, theoretically, it is possible to directly record a data file which is smaller in file size than the second data file, since the recording condition of the external recording device 2 is in the recording process allowable condition 18a during the time zone from t1 to t2. In view of this, there is proposed an idea of dividing the second data file into a number of data file blocks, and the recordable/unrecordable condition 19 is switched over to a recording process allowable condition 19a each time recording of one of the data file blocks is started, and is switched over to a recording process unallowable condition 19b each time the recording of the one data file block is completed. With this control, even if a data file other than the second data file (data file blocks) is attempted to be recorded, the recordable/unrecordable condition 19 is switched over to the recording process unallowable condition 19b. This prevents the file other than the second data file from being recorded. This arrangement prevents a data file which is not controlled by the control program from being recorded in recording a second data file of a large capacity.

FIG. 7 is a diagram for describing the condition of the external recording device 2 as to whether a recording process is allowable or unallowable. The recording process allowable conditions 18a, 19a, and the recording process unallowable conditions 18b, 19b are not limited to the illustrated examples.

As described above, by switching over the recording mode of the external recording device 2 based on the signal transmitted from the computer executing the control program 3, a recording process into the external recording device 2 is not allowed in a normal operation condition; the recording mode is switched over to the first recording mode capable of executing the recording process when the data file recording after the data format conversion is started; and the recording mode is switched over to the second recording mode incapable of executing the recording process upon completion of the data file recording process. This arrangement prevents the data file without data conversion from being recorded. Accordingly, in encrypting the first data file by the data file converting means 10, merely the encrypted data file is allowed to be recorded into the external recording device 2. This enables to prevent information leakage, because the recorded data in the external recording device 2 has been encrypted even if the external recording device 2 is lost.

In the case where the external recording device 2 is a music player provided with a recording medium, the external recording device 2 records only a data file in a format reproducible by the music player after its data format conversion. This enables to eliminate likelihood that the user may misunderstand that the music player has broken down because the music data cannot be played back resulting from recording of the irreproducible music data.

Also, recording the control program 3 capable of converting the format of the first data file and automatically switching over the recording mode of the external recording device 2 in the external recording device 2 eliminates the need of storing the control program 3 in the computer C. This enables to execute a data recording process on the computer C connected to the external recording device 2. Accordingly, in exchanging a data file between a home-use computer and an office-use computer or a like condition, the data file can be carried in an encrypted condition without the need of recording the control program in both of the computers.

Further, since the data file after the data format conversion is recorded in the external recording device 2, the data file to be recorded in the external recording device 2 is a data file after a certain data conversion such as encryption.

Furthermore, the external recording device 2 is controlled in recording the data file, without the need of constantly monitoring output data from the computer main body connected to the external recording device 2, or controlling data output permission/non-permission, an output method, or the like. This eliminates the need of monitoring data input/output to and from the computer C, and the need of executing a monitoring process at the time of startup of the computer C, thereby eliminating a load to the computer C. Also, this eliminates the need of installing an application program for executing an input/output monitoring process, whose installation is authorized exclusively by a user having a high-level user authorization such as administrative authorization. Thereby, various users including a user with a low-level user authorization are allowed to record a data file into the external recording device 2. Also, since the user is free from the need of setting data output permission/non-permission, an output method, or the like, users including less computer literates can easily use the external recording device 2.

In the following, a process to be executed in reading out the encrypted data file recorded in the external recording device 2 on the computer C is described.

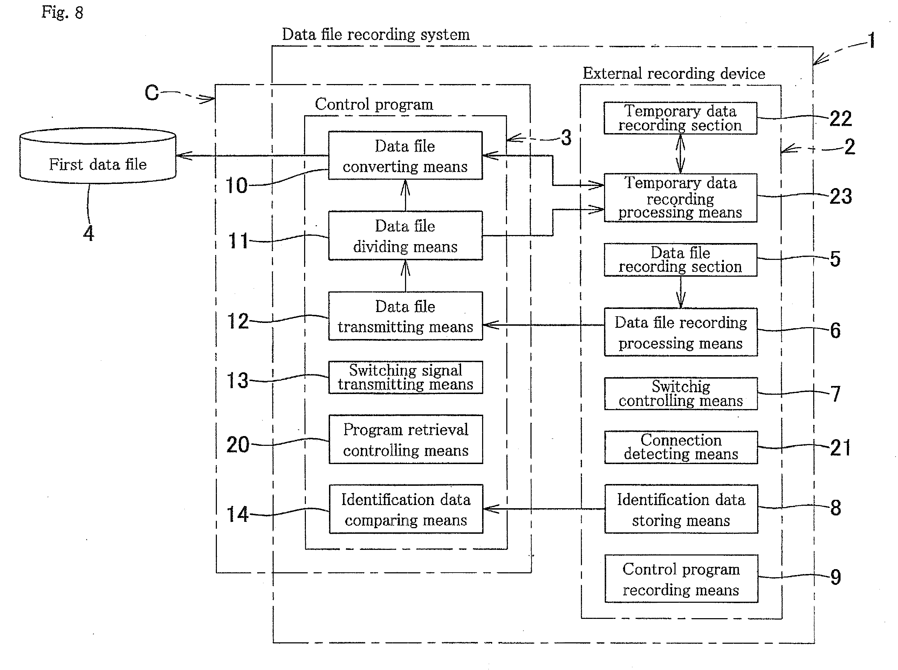

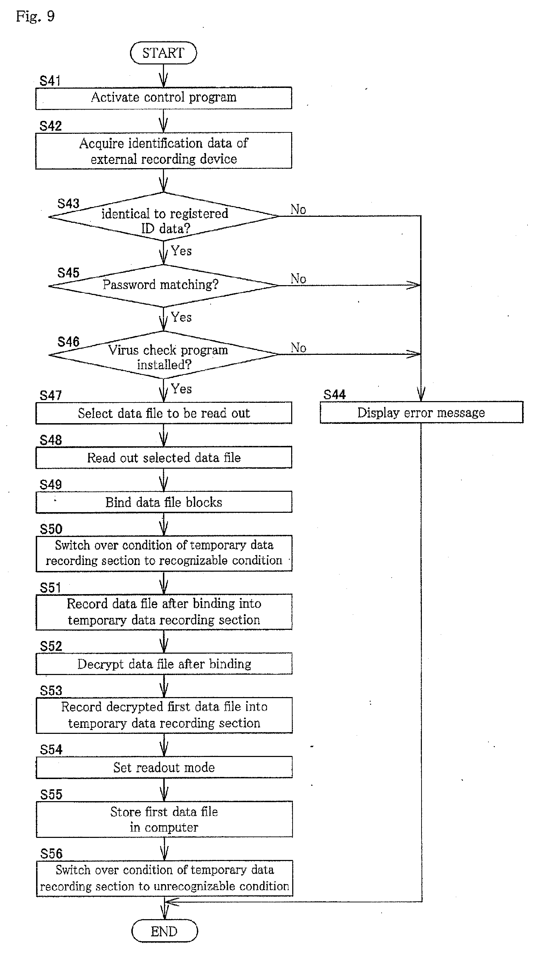

FIG. 8 is a block diagram showing a process to be executed in reading out data recorded in the data file recording section 5 from the external recording device 2. FIG. 9 is a flowchart showing the readout process to be executed.

The data file recording system 1 comprises, as shown in FIG. 8, the external recording device 2 and the control program 3.

The external recording device 2 primarily includes the data file recording section 5, the data file recording processing means 6, the switching controlling means 7, the identification data storing means 8, and the connection detecting means 21. In the case where the control program 3 is recorded in the external recording device 2 as shown in FIG. 2, the external recording device 2 has the control program recording means 9. As will be described later, in the case where a readout restriction or a like operation is executed in the readout process of a data file, the external recording device 2 has a temporary data recording section 22 and a temporary data recording processing means 23.

The data file recording section 5, the data file recording processing means, 6, the switching controlling means 7, the identification data storing means 8, the control program recording means 9, and the connection detecting means 21 respectively correspond to the relevant means or section described in the process of recording the first data file 4, and accordingly, detailed description thereof will be omitted herein.

The temporary data recording section 22 is a recording area provided in the external recording device 2, and is a work area where the temporary data recording processing means 23 executes a data recording process, or a control process concerning a condition as to whether the temporary data recording section 22 is recognizable or unrecognizable by the computer C.

The temporary data recording processing means 23 is adapted to record a data file into the temporary data recording section 22, read out the recorded data file for transmission of the data file to the data file converting means 10 or to the data file dividing means 11, and execute a process of switching over the condition of the temporary data recording section 22 between a recognizable condition where the temporary data recording section 22 is recognizable by the computer C and an unrecognizable condition where the temporary data recording section 22 is unrecognizable by the computer C. Specifically, the temporary data recording processing means 23 normally sets the temporary data recording section 22 to the unrecognizable condition. In executing a process of reading out the data recorded in the data file recording section 5, the temporary data recording processing means 23 switches over the condition of the temporary data recording section 22 to the recognizable condition so that the data file obtained by binding the data file blocks by the data file dividing means 11 is recorded into the temporary data recording section 22, or the first data file 4 decrypted by the data file dividing means 11 is recorded into the temporary data recording section 22. Upon completion of the readout process, the temporary data recording processing means 23 switches over the condition of the temporary data recording section 22 to the unrecognizable condition where the temporary data recording section 22 is unrecognizable by the computer C so that the user is not allowed to directly record the data by manipulating the computer C.

In other words, the temporary data recording section 22 is set to the recognizable condition exclusively when the process of reading out the data recorded in the external recording device 2 is executed so that a temporary data file created by the readout process is recorded into the temporary data recording section 22, and is set to the unrecognizable condition after completion of the readout process. This arrangement enables to enhance data confidentiality in a readout process without the need of recording a temporary data file created in a readout process into the computer C.

The control program 3 is a program which causes the computer C to function as the data file converting means 10, the data file dividing means 11, the data file transmitting means 12, the switching signal transmitting means 13, the identification data comparing means 14, and the program retrieval controlling means 20.

The data file converting means 10, the data file dividing means 11, the data file transmitting means 12, the switching signal transmitting means 13, the identification data comparing means 14, and the program retrieval controlling means 20 respectively correspond to the means described in the process of recording the first data file 4, and accordingly, detailed description thereof will be omitted herein. In the case where the external recording device 2 has the temporary data recording section 22 and the temporary data recording processing means 23, the data file dividing means 11 transmits temporary data obtained by binding data file blocks to the temporary data recording processing means 23 for recording the data into the temporary data recording section 22.

In the case where the external recording device 2 has the temporary data recording section 22 and the temporary data recording processing means 23, the data file converting means 10 may inversely convert data obtained by binding data file blocks by the data file dividing means 11 into the first data file 4 before data conversion (in case of encrypted data, the encrypted data is inversely converted into decrypted data) for recording the inversely converted data into the temporary data recording section 22; may record the first data file 4 into the recording medium in the computer C based on a readout authorization set in executing the recording process; or may read out the data, using an application program, without recording the data into a recording medium other than the temporary data recording section 22.

In the following, a process of reading out encrypted document data recorded in the data file recording section 5 is described referring to FIG. 9.

First, the external recording device 2 is connected to the computer C. The user manipulates the computer C to activate the control program 3 recorded in the external recording device 2 (Step S41). Alternatively, the control program 3 may be automatically activated upon connection of the external recording device 2 to the computer C, in place of the user's manipulation. Then, the identification data comparing means 14 acquires the identification data stored in the identification data storing means 8 (Step S42), and compares the identification data representing the external recording device 2 with the identification data stored in the control program 3 to judge whether the two identification data are coincident with each other (Step S43). If the two identification data are not coincident with each other, an error message is displayed, and the process of the control program 3 is ended (Step S44). If the two identification data are coincident with each other, the process thereafter is executed because the external recording device 2 connected to the computer C is a registered recording device.

If the external recording device 2 is a registered recording device, the display section of the computer C displays a password entry screen image (not shown) to prompt the user to enter a password. Then, it is judged whether the password entered by the user matches with a password stored in a password storing means (not shown) provided in the external recording device 2. If the judgment result indicates password mismatching, the routine proceeds to Step 44 (S44). If the judgment result indicates password matching, the routine proceeds to Step 46 to execute the process thereafter (Step S45).

Alternatively, biometrics such as fingerprint authentication, vein authentication, voice authentication, iris authentication may be used, in place of the password authentication.

If the judgment result in Step S45 indicates password matching, the program retrieval controlling means 20 checks whether a virus check program is installed in the computer C. If a virus check program is not installed, the routine goes to Step 44 (S44), and if a virus check program is installed, the routine goes to Step 47 (S47).

In Step 46 (S46), a judgment is made as to whether the process thereafter will be continued based on installation/non-installation of the virus check program. Alternatively, a judgment may be made as to whether the process thereafter will be continued based on installation/non-installation of a specific program such as a file exchange program, or updating/non-updating of an OS or an application program including setting/non- setting on updating thereof.

If it is judged that a virus check program is installed in Step 46 (S46), the computer C displays a file selection designation screen image on the display section thereof so that the user is allowed to select a data file to be read out (Step S47).

In response to the user's selection of the data file to be read out, the data file recording processing means 6 reads out the designated data file (Step S48). If the readout data file is a data file block divided by the data file dividing means 11, the data file dividing means 11 binds the data file blocks (Step S49). If the readout data file is a data file that has been recorded in the recording process without dividing, the routine executes a process of Step 50 (S50) without executing a process of Step 49 (S49). Thereafter, the temporary data recording processing means 23 switches over the condition of the temporary data recording section 22 to the recognizable condition where the temporary data recording section 22 is recognizable by the computer C (Step S50), and the data file obtained by binding is recorded into the temporary data recording section 22 (Step S51). Then, the data file recorded in the temporary data recording section 22 is decrypted (Step S52), and the decrypted first data file is recorded into the temporary data recording section 22 (Step S53).

In the case where readout restriction concerning the first data file such as "only readout is permitted" or "data is recordable into other recording medium" is set in the recording process of the first data file 4, a readout mode corresponding to the readout restriction is set (Step S54). If the readout mode indicates "data is recordable into other recording medium", the first data file recorded in the temporary data recording section 22 is stored in the computer C (Step S55). Then, the condition mode of the temporary data recording section 22 is switched over to the unrecognizable condition (Step S56), and the readout process is ended.

In the case where the readout mode in Step 54 (S54) indicates "only readout is permitted", an application program corresponding to the first data file recorded in the temporary data recording section 22 is activated so that the first data file is read out and displayed on the display section of the computer C, using the application program.

As described above, in the case where the first data file is converted into the data file in the predetermined data format, and recorded, using the control program 3 recorded in the external recording device 2, the recorded data file after the data format conversion can be read out from the external recording device 2, using the control program 3. In particular, in the case where a readout process of the first data file 4 is executed, using a computer C other than the computer C recorded with the first data file 4, the readout process can be executed irrespective of installation/non-installation of the control program 3 in the other computer C, because the control program 3 is portable with the external recording device 2.

Also, in reading out the data file recorded in the external recording device 2, the readout process is suspended if the data file does not satisfy a predetermined requirement after confirmation on installation/non-installation of a virus check program. This prohibits a computer with a less security performance from reading out the data file. Accordingly, there is no likelihood that the data file may be leaked via a virus program. FIG. 9 shows a case in which confirmation is made as to whether a virus check program is installed. Alternatively, a judgment may be made as to whether a readout process is to be executed, based on installation/non-installation of a specific program designated by the user, such as a file exchange program, updating/non-updating of an OS or an application program including setting/non- setting of automatic updating thereof, or the like. These altered arrangements are also advantageous in preventing leakage of the first data file 4.

Also, the temporary data file (data file for working) which is created in executing the readout process is recorded into the temporary data recording section 22 provided in the external recording device 2, there is no need of recording the temporary data file into the computer C. Since there is no need of recording the temporary data file into the computer C in the readout process, this prevents the user from intentionally recovering the temporary data file after the readout process is completed, which enables to prevent leakage of the contents of the first data file 4.

The aforementioned readout process is, as shown in FIG. 2, executed by providing the control program recording means 9 in the external recording device 2, and by reading out the control program 3 from the external recording device 2. Alternatively, as shown in FIG. 3, the computer C may have the control program recording means 9 so that the control program 3 is read out from the control program recording means 9 for execution of the control program 3. Further alternatively, in the case where the control program recording means 9 is provided both in the computer C and in the external recording device 2, execution of the control program 3 recorded in the computer C may be prioritized to increase a readout processing speed, or execution of the control program 3 designated by the user may be prioritized.

In the embodiment, the temporary data file created in executing the readout process is recorded into the temporary data recording section 22. Alternatively, the temporary data file may be recorded into a recording medium provided in the computer C executing the readout process.

In the allowing, a process to be executed in erasing the data file recorded in the external recording device 2 is described.

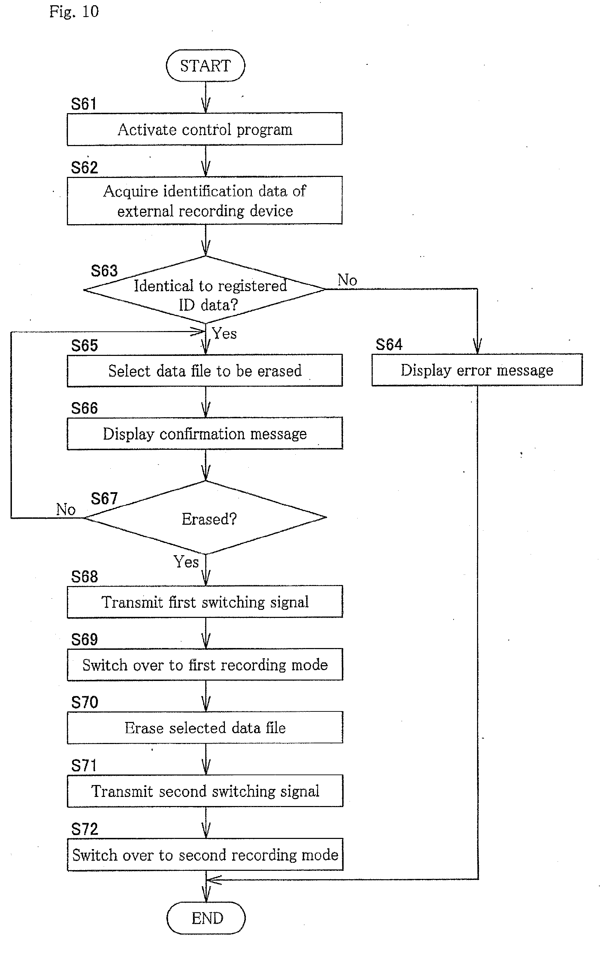

Normally, the external recording device 2 is set to the second recording mode to prevent data alteration (recording). Accordingly, the data recorded in the external recording device 2 cannot be erased in this state. Hereinafter, a process of erasing the data file recorded in the external recording device 2, using the control program 3, is described referring to FIGS. 1 and 10.

First, the user connects the external recording device 2 to the computer C to activate the control program 3 recorded in the external recording device 2 (Step S61). Upon activation of the control program 3, the identification data comparing means 14 acquires the identification data representing the external recording device 2 (Step S62). Then, the identification data comparing means 14 compares the acquired identification data with the identification data stored in the control program 3 to judge whether the two identification data are coincident with each other (Step S63). If the two identification data are not coincident, an error message is displayed, and the process of the control program 3 is ended (Step S64). If the two identification data are coincident, the display image 15 as shown in FIG. 6 is displayed so that the user is allowed to select the data file to be erased from the external recording device 2 (Step S65). Upon selection of the data file to be erased, a confirmation message is displayed to request the user of the confirmation on data file erasing (Step S66). The confirmation message is a screen image provided with two buttons: "YES" (erase) and "NO" (not erase) to request the user to depress either one of the buttons. If the user depresses "NO" on the confirmation message screen, the routine proceeds to Step 65 (S65), and if the user depresses "YES", the routine proceeds to Step 68 (S68) (Step S67). In response to depressing the button "YES", the switching signal transmitting means 13 transmits the first switching signal to the external recording device 2 (Step S68). Upon receiving the first switching signal, the switching controlling means 7 switches over to the first recording mode (Step S69), and the data file recording processing means 6 executes a process of erasing the file selected in Step 65 (S65) (Step S70). Upon completion of the file erasing process, the switching signal transmitting means 13 transmits the second switching signal to the external recording device (Step S71). Upon receiving the second switching signal, the switching controlling means 7 switches over the recording mode to the second recording mode (Step S72).

The arrangement of erasing the data file recorded in the external recording device 2 as mentioned above enables to prohibit a data file recording unless the control program 3 is executed after the file erasing process is completed.

### Industrial Applicability

According to the invention, data is allowed to be recorded into the external recording device only after data conversion. Thus, the invention is also applicable to a recording device for external data recording such as a music player or an image player, as well as to a recording device for encryption or a recording device for compression.

## Claims

1. A data file recording system comprising an external recording device detachably connectable to a computer, and a control program for controlling a process of recording a data file into the external recording device,
the external recording device including:
a data file recording section for recording a data file therein;
a data file recording processing means for executing a process of recording the data file into the data file recording section; and
a switching controlling means for switching over a recording mode between a first recording mode capable of executing the process of recording the data file into the data file recording section, and a second recording mode incapable of executing the process of recording the data file into the data file recording section to control permission/non-permission of the data file recording process, and
the control program causing the computer to function as:
a data file converting means for converting a first data file read by the computer connected to the external recording device into a second data file in a predetermined data format;
a data file transmitting means for transmitting the second data file converted by the data file converting means to the external recording device; and
a switching signal transmitting means for transmitting a first switching signal for switching over the recording mode to the first recording mode when the data file transmitting means starts transmitting the second data file, and for transmitting a second switching signal for switching over the recording mode to the second recording mode upon completion of the data transmission by the data file transmitting means, wherein
the switching controlling means in the external recording device switches over the recording mode in accordance with the switching signal transmitted from the switching signal transmitting means.

2. The data file recording system according to claim 1, wherein
the data file converting means encrypts the first data file read by the computer.

3. The data file recording system according to claim 1 or 2, wherein
the external recording device includes a control program recording means for recording the control program, and
the computer is operative to execute the control program recorded in the control program recording means.

4. The data file recording system according to claim 3, wherein
the external recording device includes an identification data storing means for storing identification data, and
the control program includes an identification data comparing means for storing identification data representing the external recording device recorded with the control program, and for comparing the identification data stored in the control program with the identification data stored in the external recording device, and
the data file transmitting means transmits the second data file exclusively when the identification data stored in the control program is coincident with the identification data stored in the external recording device.

5. The data file recording system according to any one of claims 1 through 4, wherein
the control program includes a data file dividing means for dividing the second data file converted by the data file converting means into a number of data file blocks each having a predetermined size, and
the switching signal transmitting means transmits the first switching signal in transmitting the second data file divided by the data file dividing means, and transmits the second switching signal upon completion of the transmission of the second data file divided by the data file dividing means.

6. The data file recording system according to any one of claims 1 through 5, wherein
the data file recording section includes a semiconductor memory.

7. The data file recording system according to any one of claims 1 through 6, wherein
the data file converting means converts the first data file into the second data file based on either one or both of data contents information and file attribute information of the first data file read by the computer.

8. The data file recording system according to any one of claims 1 through 7, wherein
the control program includes a program retrieval controlling means for retrieving whether a predetermined program is recorded in the computer executing the control program to control data recording and reading to and from the data file recording section based on a retrieval result.

9. The data file recording system according to any one of claims 1 through 8, wherein
the external recording device includes a connection detecting means for detecting whether the external recording device is connected to the computer, and
the switching controlling means controls the data file recording processing means to switch over the recording mode to the second recording mode when the connection detecting means detects the connection of the external recording device to the computer.

10. A data file recording method for controlling a process of recording a data file into an external recording device detachably connectable to a computer,
the external recording device including:
a data file recording section for recording a data file therein;
a data file recording processing means for executing a process of recording the data file into the data file recording section; and
a switching controlling means for controlling the data file recording processing means to switch over a recording mode thereof between a first recording mode capable of executing the process of recording the data file into the data file recording section, and a second recording mode incapable of executing the process of recording the data file into the data file recording section, the method comprising:
a step of converting the data file read by the computer to which the external recording device is detachably connected into a data file in a predetermined file format;
a step of transmitting, to the external recording device, a first switching signal for switching over the recording mode of the switching controlling means to the first recording mode,
a step of switching over the recording mode to the first recording mode in response to receiving the first switching signal from the computer;
a step of transmitting the data file after the file format conversion to the external recording device;
a step of recording the data file transmitted from the computer into the data file recording section;
a step of transmitting, to the external recording device, a second switching signal for switching over the recording mode of the switching controlling means to the second recording mode upon completion of the transmission of the data file after the file format conversion; and
a step of switching over the recording mode to the second recording mode in response to receiving the second switching signal from the computer.
